# EUROPÄISCHE PATENTANMELDUNG

(11) **EP 3 675 219 A1**
(43) Veröffentlichungstag der Anmeldung: **01.07.2020**
(21) Anmeldenummer: 19215145.4
(22) Anmeldetag: 11.12.2019
(51) Int. Cl.: H01M 2/10, H01M 10/04, H01M 10/647, H01M 10/6555, H01M 10/6563

(54) **BATTERIEMODUL AUFWEISEND EINE MEHRZAHL AN BATTERIEZELLEN**

(30) Priorität: 12.12.2018 DE 102018221541
(71) Anmelder: Robert Bosch GmbH, 70442 Stuttgart (DE)
(72) Erfinder: Schmitt, Markus, 71732 Tamm (DE)

(57) **Zusammenfassung**

Vorgeschlagen wird ein Batteriemodul (20) aufweisend eine Mehrzahl an Batteriezellen (24, 38, 40) und ein Batteriemodulgehäuse (22), wobei das Batteriemodul (20) ein zwischen einer ersten Batteriezelle (24, 38) und einer zweiten Batteriezelle (24, 40) angeordnetes Trennelement (26) aufweist und wobei das Trennelement (26) ein Trägerelement (28) mit einem ersten Aufnahmeelement (30) und einem zu dem ersten Aufnahmeelement (30) gegenüberliegend angeordneten, zweiten Aufnahmeelement (32) aufweist. Das erste Aufnahmeelement (30) des Trägerelements (28) ist in der Art mit dem Batteriemodulgehäuse (22) verbunden und weiterhin ist das zweite Aufnahmeelement (32) in der Art mit dem Batteriemodulgehäuse (22) verbunden, dass eine vom dem Batteriemodulgehäuse (22) auf das Trennelement (26) übertragene, mechanisch einwirkende Kraft von dem ersten Aufnahmeelement (30) des Trägerelements (28) zu dem zweiten Aufnahmeelement (32) des Trägerelements (28) und von dem zweiten Aufnahmeelement (32) des Trägerelements (28) auf das Batteriemodulgehäuse (22) übertragbar ist.

## Beschreibung

### Stand der Technik

Die Erfindung betrifft ein Batteriemodul aufweisend eine Mehrzahl an Batteriezellen nach Gattung des unabhängigen Anspruchs. Weiterhin ist auch die Verwendung eines solchen Batteriemoduls Gegenstand der vorliegenden Erfindung.

Aus der DE 10 2012 223 566 A1 ist ein Verfahren und eine Vorrichtung zum Formieren von Batteriezellen bekannt.

### Offenbarung der Erfindung

Erfindungsgemäß wird ein Batteriemodul aufweisend eine Mehrzahl an Batteriezellen und ein Batteriemodulgehäuse zur Verfügung gestellt. Dabei weist das Batteriemodul ein zwischen einer ersten Batteriezelle und einer zweiten Batteriezelle angeordnetes Trennelement auf, wobei das Trennelement ein Trägerelement mit einem ersten Aufnahmeelement und einem zu dem ersten Aufnahmeelement gegenüberliegend angeordneten, zweiten Aufnahmeelement aufweist. Ferner ist das erste Aufnahmeelement des Trägerelements in der Art mit dem Batteriemodulgehäuse verbunden und weiterhin ist das zweite Aufnahmeelement in der Art mit dem Batteriemodulgehäuse verbunden, dass eine vom dem Batteriemodulgehäuse auf das Trennelement übertragene, mechanisch einwirkende Kraft von dem ersten Aufnahmeelement des Trägerelements zu dem zweiten Aufnahmeelement des Trägerelements und von dem zweiten Aufnahmeelement des Trägerelements auf das Batteriemodulgehäuse übertragbar ist.

Das Batteriemodul kann zu einer Aufnahme einer Mehrzahl an Batteriezellen ausgebildet sein und kann beispielsweise in einem Fahrzeug, insbesondere in einem Elektrofahrzeug bzw. einem Electric Vehicle (EV) und/oder einem hybriden Fahrzeug bzw. einem Hybridfahrzeug (HEV) verwendet werden. Solche Fahrzeuge verwenden insbesondere energiereiche und leistungsstarke Batteriesysteme, damit die elektrischen Antriebsmaschinen die erwarteten Fahrleistungen abgeben können. Beispielsweise kann eine derartige Batterie ein oder mehrere Batteriepacks umfassen, wobei die Batteriepacks insbesondere mehrere Batteriemodule umfassen, wobei ein Batteriemodul weiterhin mehrere Zellen bzw. Batteriezellen umfassen kann. Ein Batteriemodulgehäuse kann insbesondere zu einer Aufnahme eines Batteriemoduls und somit auch insbesondere zu einer Aufnahme einer Mehrzahl an Batteriezellen ausgebildet sein. Mit anderen Worten können einzelne Batteriezellen zu Batteriemodulen zusammengeschaltet werden. Batteriemodule werden zu Batteriepacks und weiterhin zu Batterien bzw. Batteriesystemen zusammengeschaltet. Zur Ausnutzung des Bauraums der Vielzahl an verschiedenen Fahrzeugbauräumen können variable Modulgrößen verwendet werden. Als elektrische Energie-Speicher (EES) können beispielsweise Batteriepacks mit Li-Ionen-Batteriezellen bzw. Li-Polymer-Batteriezellen verwendet werden.

Der Vorteil der vorliegenden Erfindung liegt darin, dass auf das Batteriemodulgehäuse einwirkende Kräfte aufgenommen werden. Mit anderen Worten können auf das Batteriemodulgehäuse einwirkende Kräfte, beispielsweise bei einem Unfall bzw. bei einem Crash eines Fahrzeugs auftretende Kräfte, so weitergeleitet werden, bzw. so an das Trennelement weitergeleitet werden, dass diese zuverlässig bzw. sicher, insbesondere mechanisch zuverlässig, aufgenommen bzw. kompensiert werden können. Hierdurch kann Kräfte insbesondere zumindest teilweise von den Batteriezellen ferngehalten werden. Insbesondere können Kräfte quer zu Verspannungsrichtung der Batteriezellen aufgenommen werden. Hierdurch können insbesondere Crash-Anforderungen und/oder Crush-Anforderungen des Batteriemoduls eingehalten werden. Mit anderen Worten kann sichergestellt werden das insbesondere bei einer Krafteinwirkung auf das Batteriemodulgehäuse, beispielsweise durch einen Unfall bzw. durch einen Crash, die Kräfte bzw. die mechanischen Kräfte auf die unterschiedlichen Komponenten, insbesondere die Trennelemente in dem Batteriemodul, weitergeleitet werden, sodass insbesondere die Batteriezellen nicht beschädigt werden. Ein weiterer Vorteil liegt in der kostengünstigen Integration von Elementen zur Kraftaufnahme bzw. von Komponenten, die einwirkende Kräfte insbesondere zuverlässig weiterleiten. Hierdurch können die Batteriezellen insbesondere als Pouch-Zellen und/oder als prismatische Zellen ausgebildet werden. Mit anderen Worten können die Batteriezellen insbesondere vor einer einwirkenden Kraft geschützt werden, sodass die einwirkende Kraft vorzugsweise von den Batteriezellen ferngehalten werden kann.

Ein weiterer Vorteil der vorliegenden Erfindung liegt insbesondere darin, dass mittels des Trennelements ein Abstand zwischen den Batteriezellen sichergestellt werden kann. Hierdurch kann beispielsweise eine elektrische Isolation gewährleistet werden. Vorzugsweist kann eine thermische Isolation ermöglicht werden, wodurch insbesondere eine Propagation von einer Zelle zur nächsten Zelle vermieden werden. Eine Propagation ist beispielsweise eine Kettenreaktion, wobei eine übermäßige Erwärmung einer Batteriezelle im Fehlerfall auf weitere Batteriezellen übergreifen kann. Weiterhin kann insbesondere Bauraum eingespart werden. Mittels der vorliegenden Erfindung können vorteilhafterweise Toleranzkompensation zwischen den Batteriezellen und ein sicherer Betrieb der Batteriezellen realisiert werden.

In einer vorteilhaften Ausführung weist das Batteriemodulgehäuse eine erste Gehäusewand und eine zu der ersten Gehäusewand gegenüberliegend angeordnete, zweite Gehäusewand auf, wobei die erste Gehäusewand ein erstes Gehäusewandaufnahmeelement aufweist und wobei die zweite Gehäusewand ein zweites Gehäusewandaufnahmeelement aufweist. Hierdurch kann insbesondere auf einfache und mechanisch zuverlässige Weise ein Aufnahmeelement an dem Batteriemodulgehäuse realisiert werden, wobei mittels des Aufnahmeelements, insbesondere ein Element, sicher und/oder mechanisch zuverlässig aufgenommen werden kann. Insbesondere kann hierdurch Bauraum eingespart werden.

In einer Weiterentwicklung kann das erste Gehäusewandaufnahmeelement der ersten Gehäusewand das erste Aufnahmeelement des Trägerelements aufnehmen und/oder das zweite Gehäusewandaufnahmeelement der zweiten Gehäusewand das zweite Aufnahmeelement des Trägerelements aufnehmen. Hierdurch kann eine einfache und mechanisch zuverlässige Aufnahme des Trägerelements an dem Batteriemodulgehäuse ermöglicht werden. Mit anderen Worten kann das Trägerelement sicher bzw. mechanisch zuverlässig an dem Batteriemodulgehäuse angeordnet werden. Hierdurch können insbesondere auf das Batteriemodulgehäuse einwirkende Kräfte sicher und/oder zuverlässig über die Aufnahmeelemente an das Trägerelement weitergeleitet werden. Hierdurch können insbesondere Crashanforderungen eingehalten werden. Ferner kann durch die vorliegende Weiterentwicklung insbesondere Bauraum eingespart werden.

Vorteilhafterweise kann das erste Aufnahmeelement als ein Zylinder ausgebildet sein und das erste Gehäuseaufnahmeelement als eine zylinderförmige Ausnehmung in der Art ausgebildet sein, dass das zylinderförmige, erste Aufnahmeelement in dem ersten Gehäuseaufnahmeelement anordenbar ist. Zusätzlich oder alternativ kann das zweite Aufnahmeelement als ein Zylinder ausgebildet sein und das zweite Gehäuseaufnahmeelement als eine zylinderförmige Ausnehmung in der Art ausgebildet sein, dass das zylinderförmige, zweite Aufnahmeelement in dem zweiten Gehäuseaufnahmeelement anordenbar ist. Mittels dieser Weiterentwicklung kann insbesondere eine einfache und/oder mechanisch zuverlässige Aufnahme des Trägerelements an dem Batteriemodulgehäuse ermöglicht werden. Vorzugsweise kann das Trägerelement sicher bzw. mechanisch zuverlässig an dem Batteriemodulgehäuse angeordnet werden. Auf das Batteriemodulgehäuse einwirkende Kräfte können mittels der Aufnahmeelemente und dem Trägerelement insbesondere sicher weitergeleitet bzw. mittels des Trennelements und des Batteriemodulgehäuses aufgenommen werden. Hierdurch können insbesondere Crashanforderungen eingehalten werden. Ferner kann durch die Weiterentwicklung insbesondere Bauraum eingespart werden.

In einer beispielhaften Ausgestaltung kann das erste Aufnahmeelement des Trägerelements formschlüssig, kraftschlüssig und/oder stoffschlüssig mit dem Batteriemodulgehäuse, insbesondere mit dem ersten Gehäuseaufnahmeelement, verbunden sein. Alternativ oder zusätzlich kann das zweite Aufnahmeelement des Trägerelements formschlüssig, kraftschlüssig und/oder stoffschlüssig mit dem Batteriemodulgehäuse, insbesondere mit dem zweiten Gehäuseaufnahmeelement, verbunden sein. Hierdurch kann eine einfache und/oder mechanisch zuverlässige Aufnahme des Trägerelements an dem Batteriemodulgehäuse ermöglicht werden. Mit anderen Worten kann das Trägerelement mittels einer formschlüssig, kraftschlüssig und/oder stoffschlüssig Verbindung vorzugsweise sicher bzw. mechanisch zuverlässig an dem Batteriemodulgehäuse angeordnet werden. Hierdurch können insbesondere auf das Batteriemodulgehäuse einwirkende Kräfte sicher über die Aufnahmeelemente an das Trägerelement weitergeleitet werden. Mittels der formschlüssig, kraftschlüssig und/oder stoffschlüssig Verbindung kann insbesondere gewährleistet werden, dass das Trägerelement nicht gegenüber dem Batteriemodulgehäuse verrutscht. Mit anderen Worten kann hierdurch gewährleistet werden, dass sich die Position des Trägerelements bzw. des Trennelements gegenüber dem Batteriemodulgehäuse nicht verändert. Hierdurch können insbesondere Crashanforderungen eingehalten werden. Ferner kann durch die vorgeschlagene Weiterentwicklung insbesondere Bauraum eingespart werden.

In einer Weiterentwicklung kann das Trägerelement aus einem metallischen Werkstoff und/oder aus einem polymeren Werkstoff ausgebildet sein. Hierdurch kann insbesondere die mechanische Stabilität des Trägerelements verbessert werden. Ein weiterer Vorteil liegt in der einfachen Bearbeitung eines metallischen oder polymeren Werkstoffs. Ferner kann mittels eines polymeren Werkstoff insbesondere Gewicht eingespart werden. Mittels einer metallischen Werkstoffs kann zum Beispiel eine mechanische Stabilität gewährleistet werden.

In einer vorteilhaften Ausführung kann zwischen dem Trennelement und der ersten Batteriezelle ein erster Fluidraum ausgebildet sein und zwischen dem Trennelement und der zweiten Batteriezelle ein zweiter Fluidraum ausgebildet sein. Der erste Fluidraum und der zweite Fluidraum können insbesondere ein Fluid aufweisen, wobei das Fluid insbesondere als Luft ausgebildet ist. Mit anderen Worten ist der erste Fluidraum und der zweite Fluidraum vorzugsweise mit Luft gefüllt, wobei Luft eine relativ geringe Wärmeleitfähigkeit aufweist. Hierdurch kann mittels des Fluidraums einen Wärmestrom zwischen zwei benachbarten Zellen vermieden bzw. reduziert werden, wodurch eine Propagation vermieden bzw. zumindest die Wahrscheinlichkeit einer Propagation verringert werden kann. Durch die beiden Luftspalte zwischen der ersten Batteriezelle und der zweiten Batteriezelle kann eine thermische Isolation erzielt werden und eine Propagation von einer Zelle zur nächsten Zelle vermieden werden.

Vorzugsweise kann eine kostengünstige Integration einer Propagationsschutz-Funktion zwischen benachbarten Zellen und/oder der Kompensationsfunktion in einem Bauteil realisiert werden. Eine übermäßige Erwärmung einer Batteriezelle kann im Fehlerfall auf weitere Batteriezellen übergreifen kann, was allgemein auch als Propagation bezeichnet werden kann. Ein Propagationsschutz schützt die einzelnen Batteriezellen vor einer solchen Kettenreaktion. Weiterhin kann insbesondere Bauraum eingespart werden. Die beschriebenen Vorteile ermöglichen den Einsatz des Batteriemoduls bei Pouch-Zellen und prismatischen Zellen. Mittels der vorliegenden Erfindung können insbesondere Toleranzkompensation zwischen den Batteriezellen und ein sicherer Betrieb der Batteriezellen realisiert werden.

In einer Weiterentwicklung kann sich das Trennelement an der ersten Batteriezelle und/oder an der zweiten Batteriezelle mechanisch abstützt. Alternativ oder zusätzlich kann das Trennelement mittels der ersten Batteriezelle und/oder der zweite Batteriezelle führbar sein. Hierdurch kann insbesondere gewährleistet werden, dass das Trennelement eine konstante bzw. zumindest annähernd gleichbleibende Position in Bezug zu den Batteriezellen und/oder in Bezug zu dem Batteriemodulgehäuse ausbildet. Mit anderen Worten kann ein Verrutschen des Trägerelements bzw. des Trennelements gegenüber dem Batteriemodulgehäuse bzw. einer Gehäusewand des Batteriemodulgehäuses verhindert bzw. reduziert werden. Hierdurch kann insbesondere gewährleistet werden, dass eine auf das Batteriemodulgehäuse einwirkende Kraft sicher und/oder mechanisch zuverlässig auf das Trennelement übertragen werden kann und weiterhin von dem Trennelement erneut auf das Batteriemodulgehäuse übertragen werden kann. Hierdurch kann gewährleistet werden, dass insbesondere die Form des Trennelements bzw. des Trägerelements konstant gehalten werden kann. Mit anderen Worten kann gewährleistet werden, dass sich das Trennelement bzw. das Trägerelement nicht verbiegt bzw. nicht abgeknickt. Hierdurch kann insbesondere gewährleistet werden, dass Crash-Anforderungen eingehalten werden, wobei eine einwirkende Kraft auf das Batteriemodulgehäuse insbesondere sicher aufgenommen bzw. kompensiert werden kann.

Vorzugsweise kann das Trägerelement eine der ersten Batteriezelle zugewandten ersten Oberfläche und eine der zweiten Batteriezelle zugewandte zweite Oberfläche umfassen, wobei die erste Oberfläche eine Mehrzahl an elastisch verformbar ausgebildeten und jeweils kontaktierend mit der ersten Batteriezelle angeordneten und das Trennelement mechanisch abstützende, erste Kompensationselemente umfasst. Alternativ oder zusätzlich kann die zweite Oberfläche eine Mehrzahl an elastisch verformbar ausgebildeten und jeweils kontaktierend mit der zweiten Batteriezelle angeordneten und das Trennelement mechanisch abstützende, zweite Kompensationselemente umfassen. Die ersten Kompensationselemente und/oder die zweiten Kompensationselemente können insbesondere aus einem elastomeren Werkstoff ausgebildet sein.

Hierdurch kann gewährleistet werden, dass die Batteriezellen insbesondere mittels der Kompensationselemente vorgespannt werden. Mit anderen Worten kann eine Vorspannung der Batteriezellen im Batteriemodulgehäuse gewährleistet werden. Vorteilhafterweise können insbesondere Volumenänderungen der Batteriezellen, beispielsweise ein sogenanntes Swellings der Batteriezellen, kompensiert werden. insbesondere können hierdurch auch Formtoleranzen und Lagetoleranzen kompensiert werden. Ferner kann insbesondere verhindert werden, dass sich benachbarte Batteriezellen kontaktieren. Mit anderen Worten kann ein Abstand zwischen zwei benachbarten Batteriezellen sichergestellt werden, sodass die Batteriezellen sich nicht kontaktieren. Hierdurch kann eine elektrische und/oder thermische Isolation ermöglicht werden. Ferner kann gewährleistet werden, dass der Fluidraum, mit anderen Worten der Raum zwischen benachbarten Zellen, getrennt werden kann. Hierdurch kann vorzugsweise ein konstanter Fluidfilm inzwischen benachbarten Batteriezellen sichergestellt werden. Mit anderen Worten kann gewährleistet werden, dass ein Fluidfilm zwischen zwei benachbarten Batteriezellen ausgebildet bleibt. Hierdurch kann beispielsweise auch verhindert bzw. reduziert werden, dass sich zwei benachbarte Batteriezellen gegenseitig erwärmen. Hierdurch kann ein Propagationsschutz ermöglicht werden.

Weiterhin können die Kompensationselemente, insbesondere durch die Ausbildung der ersten Kompensationselemente und/oder der zweiten Kompensationselemente aus einem elastomeren Werkstoff, elastisch verformbar sein, wodurch eine Veränderung des Volumens der Batteriezellen kompensiert werden kann.

Ferner können Formtoleranzen und Lagetoleranzen kompensiert werden. Weiterhin ermöglicht der elastische Werkstoff eine Verformung, die insbesondere in ihren ursprünglichen Ausgangszustand zurückkehren kann. Vorteilhafterweise kann sich ein elastomerer Werkstoffs insbesondere zumindest teilweise inkompressibel verhalten. Inkompressibilität bezeichnet die Eigenschaft eines Stoffes, unter Druckeinwirkung bei konstanter Temperatur sein Volumen nicht zu ändern, sich also nicht komprimieren zu lassen. Hierdurch kann insbesondere gewährleistet werden, dass stets ein Fluidraum zwischen den Batteriezellen bestehen bleibt. Mit anderen Worten kann gewährleistet werden, dass ein Fluidfilm zwischen zwei benachbarten Batteriezellen bestehen bleibt. Hierdurch kann eine thermische Isolation benachbarter Zellen sichergestellt bzw. gewährleistet werden, wodurch die Sicherheit des Batteriemoduls verbessert werden kann.

In einer beispielhaften Ausgestaltung können die Mehrzahl an ersten Kompensationselementen und/oder die Mehrzahl an zweiten Kompensationselementen jeweils formschlüssig, stoffschlüssig oder kraftschlüssig mit dem Trägerelement verbunden sein. Hierdurch kann sichergestellt werden, dass die Kompensationselemente sicher bzw. zuverlässig an dem Trägerelement angeordnet sind. Die Kompensation einer Volumenänderung und der Ausgleich der Formtoleranzen und Lagetoleranzen kann somit gewährleistet werden.

Weiterhin wird die Verwendung eines Batteriemoduls vorgeschlagen, wobei zu einer Erhöhung der mechanischen Stabilität bei einer Krafteinwirkung auf das Batteriemodulgehäuse die einwirkende Kraft von dem Batteriemodulgehäuse auf das erste Aufnahmeelement des Trägerelements, von dem ersten Aufnahmeelement des Trägerelements zu dem zweiten Aufnahmeelement des Trägerelements und von dem zweiten Aufnahmeelement des Trägerelements auf das Batteriemodulgehäuse übertragen werden kann. Alternativ oder zusätzlich kann zu einer Erhöhung der mechanischen Stabilität bei einer Krafteinwirkung auf das Batteriemodulgehäuse die einwirkende Kraft, wobei die Kraft in entgegengesetzter Richtung zu der oben beschriebenen Kraft einwirkt, von dem Batteriemodulgehäuse auf das zweite Aufnahmeelement des Trägerelements, von dem zweiten Aufnahmeelement des Trägerelements zu dem ersten Aufnahmeelement des Trägerelements und von dem ersten Aufnahmeelement des Trägerelements auf das Batteriemodulgehäuse übertragen werden.

Hierdurch können insbesondere auf das Batteriemodulgehäuse einwirkende Kräfte insbesondere mittels des Trennelements sicher und/oder mechanisch zuverlässig aufgenommen bzw. weitergeleitet werden. Mit anderen Worten können auf das Batteriemodulgehäuse einwirkende Kräfte so weitergeleitet werden, bzw. so an das Trennelement weitergeleitet werden, dass diese zuverlässig bzw. sicher, insbesondere mechanisch zuverlässig, aufgenommen bzw. kompensiert werden können. Hierdurch können insbesondere Crash-Anforderungen und/oder Crush-Anforderungen eingehalten werden. Ein weiterer Vorteil liegt in der kostengünstigen Integration von Elementen zur Kraftaufnahme bzw. von Komponenten, die einwirkende Kräfte insbesondere zuverlässig weiterleiten. Hierdurch können die Batteriezellen insbesondere als Pouch-Zellen und/oder als prismatische Zellen ausgebildet werden.

Weiterhin kann ein Batteriemodul vorteilhafterweise in der Art verwendet werden, dass sich das Trennelement mittels der Mehrzahl an ersten Kompensationselementen an der ersten Batteriezelle mechanisch abstützt und/oder dass sich das Trennelement mittels der Mehrzahl an zweiten Kompensationselementen an der zweiten Batteriezelle mechanisch abstützt, sodass das Trennelement in Bezug zu der ersten Batteriezelle und/oder der zweiten Batteriezelle zumindest teilweise konstant angeordnet ist.

Hierdurch kann insbesondere gewährleistet werden, dass mittels des Trennelements ein Abstand zwischen den Batteriezellen sichergestellt werden kann, wodurch beispielsweise eine elektrische Isolation gewährleistet werden kann. Weiterhin kann insbesondere Bauraum eingespart werden. Mittels der vorliegenden Erfindung können vorteilhafterweise Toleranzkompensation zwischen den Batteriezellen und ein sicherer Betrieb der Batteriezellen realisiert werden. Weiterhin kann mittels der vorgeschlagenen Verwendung insbesondere die Form des Trennelements bzw. des Trägerelements konstant gehalten werden. Mit anderen Worten kann gewährleistet werden, dass sich das Trennelement bzw. das Trägerelement nicht verbiegt bzw. nicht abgeknickt. Hierdurch kann insbesondere gewährleistet werden, dass Crash-Anforderungen eingehalten werden, wobei eine einwirkende Kraft auf das Batteriemodulgehäuse insbesondere sicher und/oder mechanisch zuverlässig aufgenommen bzw. kompensiert werden kann.

### Kurze Beschreibung der Zeichnungen

Ausführungsbeispiele der Erfindung sind in den Zeichnungen dargestellt und in den nachfolgenden Beschreibungen näher erläutert. Für die in den verschiedenen Figuren dargestellten und ähnlich wirkenden Elemente werden gleiche Bezugszeichen verwendet, wobei auf eine wiederholte Beschreibung der Elemente verzichtet wird. Es zeigen:
Fig. 1 in einer Schnittansicht eine schematische Darstellung eines Batteriemoduls gemäß einem Ausführungsbeispiel der vorliegenden Erfindung;
Fig. 2 in einer perspektivischen Ansicht eine schematische Darstellung eines Trennelements gemäß einem Ausführungsbeispiel der vorliegenden Erfindung;
Fig. 3 in einer Schnittansicht eine schematische Darstellung eines Batteriemoduls gemäß einem Ausführungsbeispiel der vorliegenden Erfindung;
Fig. 4 in einer Schnittansicht eine schematische Darstellung eines Ausschnitts eines Batteriemoduls gemäß einem zweiten Ausführungsbeispiel der vorliegenden Erfindung;
Fig. 5 in einer Schnittansicht eine schematische Darstellung eines Batteriemoduls gemäß einem Ausführungsbeispiel der vorliegenden Erfindung.

### Ausführungsformen der Erfindung:

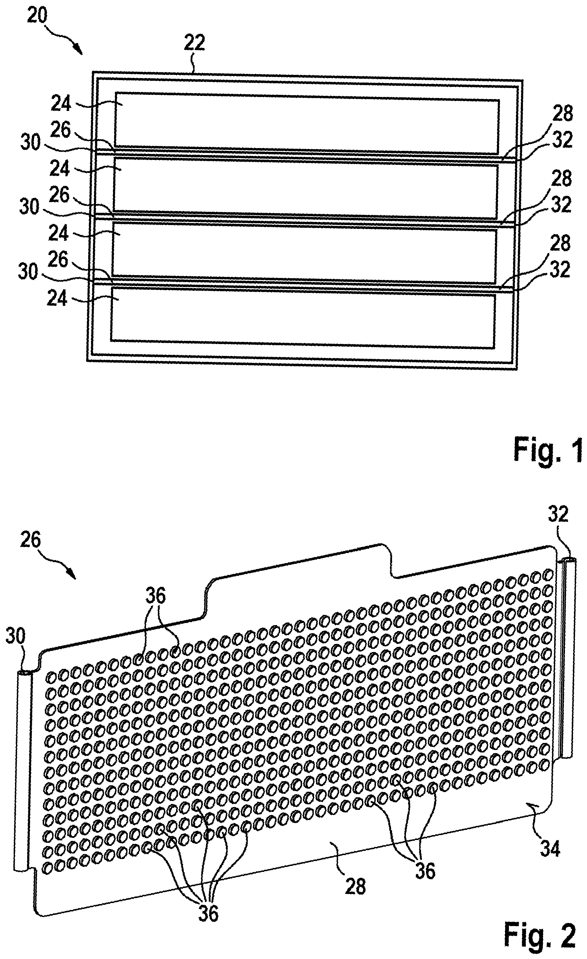

Fig. 1 zeigt in einer Schnittansicht eine schematische Darstellung eines Batteriemoduls 20 gemäß einem Ausführungsbeispiel der vorliegenden Erfindung. Das Batteriemodul 20 weist ein Batteriemodulgehäuse 22 auf, wobei das Batteriemodulgehäuse 22 ausgebildet ist zu einer Aufnahme einer Mehrzahl an Batteriezellen 24 und bei dem gezeigten Ausführungsbeispiel gemäß Fig. 1 auch eine Mehrzahl an Batteriezellen 24 aufnimmt. Mit anderen Worten kann eine Mehrzahl an Batteriezellen 24 innerhalb des Batteriemodulgehäuses 22 und somit innerhalb des Batteriemoduls 20 angeordnet bzw. aufgenommen werden. Zur Verwendung des Batteriemoduls 20 können die Batteriezellen 24 beispielsweise parallel oder seriell bzw. in Reihe miteinander geschaltet werden, wobei die einzelnen Batteriezellen 24 dazu insbesondere mittels Zellverbinder elektrisch leitend miteinander verschaltet werden können. Das Batteriemodul 20 kann beispielsweise in einem Fahrzeug, insbesondere in einem Elektrofahrzeug bzw. einem Electric Vehicle (EV) und/oder einem hybriden Fahrzeug bzw. einem Hybridfahrzeug (HEV) verwendet werden.

Als elektrische Energie-Speicher (EES) können beispielsweise Batteriepacks mit Li-Ionen-Batteriezellen bzw. Li-Polymer-Batteriezellen verwendet werden. Die optimale Betriebstemperatur von Li-Ionen-Batteriezellen bzw. Li-Polymer-Batteriezellen beträgt ca. +5°C bis +35°C. Mittels eines Fluidraums kann insbesondere einen Wärmestrom zwischen zwei benachbarten Zellen vermieden werden, wodurch eine Propagation vermieden bzw. zumindest die Wahrscheinlichkeit einer Propagation verringert werden kann. Durch einen Luftspalt zwischen der ersten Batteriezelle und der zweiten Batteriezelle kann eine thermische Isolation erzielt werden und eine Propagation von einer Zelle zur nächsten Zelle vermieden werden.

Weiterhin weist das Batteriemodul 20 Trennelemente 26 auf. Ein Trennelement 26 ist insbesondere zwischen zwei Batteriezellen 24, insbesondere einer ersten Batteriezelle sowie einer zweiten Batteriezelle, angeordnet. Ein Trennelement 26 kann insbesondere ein Trägerelement 28 umfassen. Das Trägerelement 28 eines Trennelements 26 kann insbesondere ein erstes Aufnahmeelement 30 und ein zu dem ersten Aufnahmeelement 30 gegenüberliegend angeordnetes, zweites Aufnahmeelement 32 aufweisen. Das erste Aufnahmeelement 30 des Trägerelements 28 ist in der Art mit dem Batteriemodulgehäuse 22 verbunden und weiterhin ist das zweite Aufnahmeelement 32 in der Art mit dem Batteriemodulgehäuse 22 verbunden ist, dass eine vom dem Batteriemodulgehäuse 22 auf das Trennelement 26 übertragene, mechanisch einwirkende Kraft von dem ersten Aufnahmeelement 30 des Trägerelements 28 zu dem zweiten Aufnahmeelement 32 des Trägerelements 28 und von dem zweiten Aufnahmeelement 32 des Trägerelements 28 auf das Batteriemodulgehäuse 22 übertragbar ist.

Das Trägerelement 28 kann beispielsweise aus einem metallischen Werkstoff oder aus einem polymeren Werkstoff ausgebildet sein. In einer Weiterentwicklung kann das Trägerelement 28 aus einem metallischen Werkstoff und aus einem polymeren Werkstoff ausgebildet sein. Mit anderen Worten kann das Trägerelement 28 aus einem Metall-Polymer-Verbund ausgebildet sein. Die Trennelement 26 sowie die Batteriezellen 24 sind insbesondere alternierend angeordnet.

Fig. 2 zeigt in einer perspektivischen Ansicht eine schematische Darstellung eines Trennelements 26 gemäß einem Ausführungsbeispiel der vorliegenden Erfindung. Das Trennelement 26 gemäß Fig. 2 kann gemäß dem Trennelement 26 gemäß Fig. 1 ausgebildet sein. Weiterhin kann das Trennelement 26 gemäß Fig. 2 gemäß dem Trennelement 26 gemäß Fig. 1 in einem Batteriemodul 20 gemäß Fig. 1 angeordnet sein.

Das Trennelement 26 weist in dieser vorteilhaften Ausführung ein Trägerelement 28 mit einem ersten Aufnahmeelement 30 und einem zu dem ersten Aufnahmeelement 30 gegenüberliegend angeordneten, zweiten Aufnahmeelement 32 auf. Das erste Aufnahmeelement 30 des Trägerelements 28 ist in einer vorteilhaften Weiterentwicklung in der Art mit einem Batteriemodulgehäuse verbindbar ausgebildet und weiterhin ist das zweite Aufnahmeelement 32 in der Art mit dem Batteriemodulgehäuse verbindbar ausgebildet, dass eine vom dem Batteriemodulgehäuse auf das Trennelement 26 übertragene, mechanisch einwirkende Kraft von dem ersten Aufnahmeelement 30 des Trägerelements 28 zu dem zweiten Aufnahmeelement 32 des Trägerelements 28 und von dem zweiten Aufnahmeelement 32 des Trägerelements 28 auf das Batteriemodulgehäuse übertragbar ist. Das Trägerelement 28 kann insbesondere aus einem metallischen Werkstoff und/oder aus einem polymeren Werkstoff ausgebildet sein.

Das erste Aufnahmeelement 30 ist insbesondere als ein Zylinder ausgebildet. Weiterhin ist in dieser Ausführung das zweite Aufnahmeelement 32 ebenfalls als ein Zylinder ausgebildet. Mit anderen Worten weist das erste Aufnahmeelement 30 und das zweite Aufnahmeelement 32 eine zylinderförmige Gestalt auf. Beispielsweise kann ein Abschnitt des Trägerelements 28 zur Ausbildung des ersten Aufnahmeelements 30 derart gebogen ausgebildet sein, dass das erste Aufnahmeelement 30 als eine zylinderförmige Gestalt bzw. eine ringförmige Gestalt ausgebildet ist. Das zweite Aufnahmeelement 32 kann entsprechendes des ersten Aufnahmeelements 30 ausgebildet sein.

Das Trägerelement 28 kann insbesondere rechteckig bzw. als rechteckige Form ausgebildet sein. Das erste Aufnahmeelement 30 und das zweite Aufnahmeelement 32 können an den gegenüberliegenden kurzen Seiten des Trägerelement 28 im Gegensatz zu den längeren Seiten des Trägerelements 28 angeordnet sein.

Das Trennelement 26 kann insbesondere zwischen zwei Batteriezellen derart in einem Batteriemodul angeordnet werden, dass zwischen dem Trennelement 26 und einer ersten Batteriezelle ein erster Fluidraum ausgebildet ist und zwischen dem Trennelement 26 und der zweiten Batteriezelle ein zweiter Fluidraum ausgebildet ist.

In dieser Ausführungsform weist bzw. umfasst das Trägerelement 28 eine einer hier nicht dargestellten, ersten Batteriezelle zugewandte, erste Oberfläche 34 und eine einer hier nicht dargestellten, zweiten Batteriezelle zugewandte, zweite Oberfläche. Die erste Oberfläche 34 umfasst bzw. weist in einer Ausführungsform eine Mehrzahl an elastisch verformbar ausgebildeten und jeweils kontaktierend mit der ersten Batteriezelle angeordneten und das Trennelement 26 mechanisch abstützende, ersten Kompensationselementen 36 auf. Die zweite Oberfläche umfasst ebenfalls eine Mehrzahl an hier nicht dargestellten, elastisch verformbar ausgebildeten und jeweils kontaktierend mit der zweiten Batteriezelle angeordneten und das Trennelement 26 mechanisch abstützende, zweite Kompensationselemente.

Ferner können die Mehrzahl an ersten Kompensationselementen 36 und/oder die Mehrzahl an zweiten Kompensationselementen jeweils aus einem elastomeren Werkstoff ausgebildet sein. Die Mehrzahl an ersten Kompensationselementen 36 und/oder die Mehrzahl an zweiten Kompensationselementen können insbesondere jeweils formschlüssig, stoffschlüssig oder kraftschlüssig mit dem Trägerelement 28 verbunden sein. Beispielsweise können die Kompensationselemente 36 mittels eines Befestigungsmittels und/oder mittels eines Klebstoffs, zum Beispiel eines Flüssigklebstoffs oder eines Klebestreifens, mit dem Trägerelement 28 verbunden werden und/oder an dem Trägerelement 28 befestigt werden.

Die Mehrzahl an ersten Kompensationselementen 36 und/oder die Mehrzahl an zweiten Kompensationselementen weisen insbesondere jeweils eine senkrecht zu einem kürzesten Abstand zwischen einer hier nicht dargestellten, ersten Batteriezelle und einer hier nicht dargestellten, zweiten Batteriezelle angeordnete Querschnittsfläche auf. Die Querschnittsfläche kann beispielsweise eine kreisförmige, runde, ovale, dreieckige, rechteckige oder quadratische Form aufweisen. Mit anderen Worten kann die Querschnittsfläche der ersten Kompensationselemente 36 und der zweiten Kompensationselemente zum Beispiel kreisförmig rund, oval, dreieckig, rechteckig oder quadratisch ausgebildet sein. In einer Weiterentwicklung kann die Mehrzahl an ersten Kompensationselementen 36 und/oder die Mehrzahl an zweiten Kompensationselementen jeweils eine kugelförmige, quaderförmige, kegelförmige, würfelförmige, ellipsoide Gestalt ausbilden. Mit anderen Worten können die Kompensationselemente 36 kugelförmig bzw. als Kugel, quaderförmig bzw. als Quader, kegelförmig bzw. als Kegel, würfelförmig bzw. als Würfel, als Ellipsoid und/oder als Zylinder ausgebildet sein. In einer ersten Ausführung können alle Kompensationselemente 36 die gleiche Form aufweisen. In einer Weiterentwicklung können Kompensationselemente mit unterschiedlichen Formen ausgebildet sein.

Weiterhin können in einer Ausgestaltungsform die Mehrzahl an ersten Kompensationselementen 36 und die Mehrzahl an zweiten Kompensationselementen spiegelsymmetrisch zueinander angeordnet sein. Die Spiegelachse kann insbesondere entlang des Trägerelements 28 verlaufen. Mit anderen Worten können die Mehrzahl an ersten Kompensationselementen 36 spiegelsymmetrisch zu der Mehrzahl an zweiten Kompensationselementen bezüglich einer Spiegelachse, insbesondere zu einer Spiegelachse durch das Trägerelement 28, angeordnet sein. Mit anderen Worten können die Mehrzahl an ersten Kompensationselemente 36 derart angeordnet sein, dass diese als ein Spiegelbild der Mehrzahl an zweiten Kompensationselemente an einer entsprechenden Spiegelachse, insbesondere einer Spielachse durch das Trägerelement 28, ausgebildet sind.

In dieser vorteilhaften Ausführung sind die ersten Kompensationselemente 36 insbesondere in einem gleichmäßigen Muster auf der ersten Oberfläche 34 des Trägerelements 28 angeordnet. Beispielsweise sind die ersten Kompensationselemente 36 auf mehreren horizontalen Linien angeordnet, wobei eine Mehrzahl Kompensationselemente in mehreren horizontalen Linien parallel untereinander angeordnet sind. In einer Weiterentwicklung kann das Trennelement 26 einen ersten Bereich mit einer ersten Dichte an ersten Kompensationselementen 36 bzw. an zweiten Kompensationselementen aufweisen und einen zweiten Bereich mit einer zweiten Dichte an ersten Kompensationselementen 36 bzw. an zweiten Kompensationselementen aufweisen, wobei die erste Dichte einen höheren Wert aufweist als die zweite Dichte.

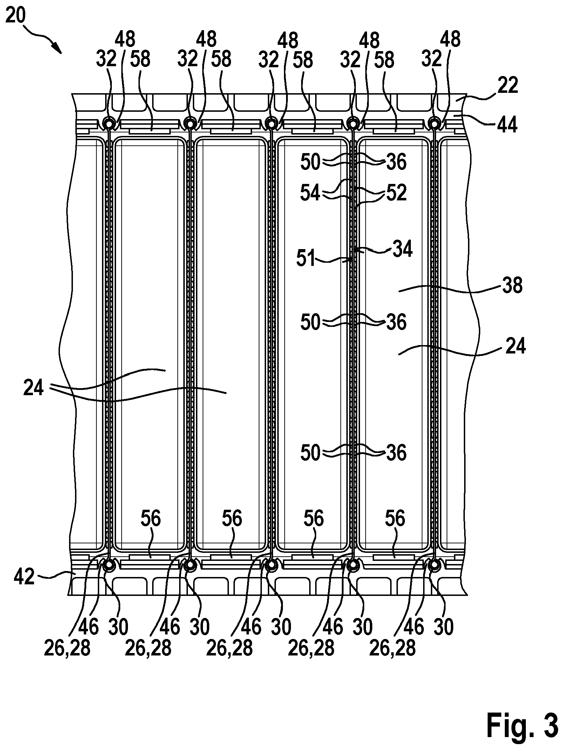

Fig. 3 zeigt in einer Schnittansicht eine schematische Darstellung eines Batteriemoduls 20 gemäß einem Ausführungsbeispiel der vorliegenden Erfindung. Das Batteriemodul 20 gemäß Fig. 3 kann gemäß dem Batteriemodul 20 gemäß Fig. 1 ausgebildet sein. Das Batteriemodul 20 gemäß Fig. 3 weist ein zwischen einer ersten Batteriezelle 38 und einer zweiten Batteriezelle 40 angeordnetes Trennelement 26 auf, wobei das Trennelement 26 gemäß Fig. 3 gemäß dem Trennelement 26 gemäß Fig. 2 ausgebildet sein kann.

Das Trennelement 26 weist ein Trägerelement 28 mit einem ersten Aufnahmeelement 30 und mit einem zu dem ersten Aufnahmeelement 30 gegenüberliegend angeordneten, zweiten Aufnahmeelement 32 auf. Das erste Aufnahmeelement 30 des Trägerelements 28 ist in der Art mit dem Batteriemodulgehäuse 22 verbunden und weiterhin ist das zweite Aufnahmeelement 32 in der Art mit dem Batteriemodulgehäuse 22 verbunden, dass eine vom dem Batteriemodulgehäuse 22 auf das Trennelement 26 übertragene, mechanisch einwirkende Kraft von dem ersten Aufnahmeelement 30 des Trägerelements 28 zu dem zweiten Aufnahmeelement 32 des Trägerelements 28 und von dem zweiten Aufnahmeelement 32 des Trägerelements 28 auf das Batteriemodulgehäuse 22 übertragbar ist.

Hierfür weist das Batteriemodulgehäuse 22 eine erste Gehäusewand 42 und eine zu der ersten Gehäusewand 42 gegenüberliegend angeordnete, zweite Gehäusewand 44 auf. Die erste Gehäusewand 42 weist dieser vorteilhaften Ausführung ein erstes Gehäusewandaufnahmeelement 46 auf. Weiterhin weist die zweite Gehäusewand 44 ein zweites Gehäusewandaufnahmeelement 48 auf. Das erste Gehäusewandaufnahmeelement 46 der ersten Gehäusewand 42 nimmt das erste Aufnahmeelement 30 des Trägerelements 28 auf. Weiterhin nimmt das zweite Gehäusewandaufnahmeelement 48 der zweiten Gehäusewand 44 das zweite Aufnahmeelement 32 des Trägerelements 28 auf. Mit anderen Worten ist das erste Aufnahmeelement 30 des Trägerelements 28 an dem ersten Gehäusewandaufnahmeelement 46 der ersten Gehäusewand 42 angeordnet bzw. mit dem ersten Gehäusewandaufnahmeelement 46 der ersten Gehäusewand 42 verbunden. Weiterhin ist das zweite Aufnahmeelement 32 des Trägerelements 28 insbesondere an dem zweiten Gehäusewandaufnahmeelement 48 der zweiten Gehäusewand 44 angeordnet bzw. mit dem zweiten Gehäusewandaufnahmeelement 48 der zweiten Gehäusewand 44 verbunden.

Das erste Aufnahmeelement 30 des Trägerelements 28 ist in dieser vorteilhaften Ausführung insbesondere als ein Zylinder ausgebildet. Weiterhin ist das erste Gehäuseaufnahmeelement 46 der ersten Gehäusewand 42 als eine zylinderförmige Ausnehmung in der Art ausgebildet, dass das zylinderförmige, erste Aufnahmeelement 30 in dem ersten Gehäuseaufnahmeelement 46 angeordnet ist. Weiterhin ist das zweite Aufnahmeelement 32 des Trägerelements 28 ist in dieser beispielhaften Ausführung insbesondere als ein Zylinder ausgebildet. Das zweite Gehäuseaufnahmeelement 48 der zweiten Gehäusewand 44 ist als eine zylinderförmige Ausnehmung in der Art ausgebildet, dass das zylinderförmige, zweite Aufnahmeelement 32 in dem zweiten Gehäuseaufnahmeelement 48 angeordnet ist. Mit anderen Worten ist das jeweilige Gehäuseaufnahmeelement derart ausgebildet, dass ein entsprechendes Aufnahmeelement des Trägerelements 28 aufgenommen werden kann. Hierbei können die Aufnahmeelemente des Trägerelements 28 und die entsprechenden Gehäuseaufnahmeelemente des Batteriemodulgehäuses 22 andere Formen aufweisen bzw. in einer anderen Ausgestaltung bzw. Form ausgebildet sein. In dieser vorteilhaften Ausführung sind die Aufnahmeelemente sowie die entsprechenden Gehäuseaufnahmeelemente derart ausgebildet, dass das Trennelement 26 in das Batteriemodulgehäuse 22 gesteckt werden kann. Insbesondere wird eine Steckverbindung zur Anordnung des Trennelements 26 an dem Batteriemodulgehäuse 22 verwendet.

Mit anderen Worten weist eine erste Seite des Trägerelements 28 ein erstes Aufnahmeelement 30 in der Art auf und weiterhin weist das Batteriemodulgehäuse 22 ein entsprechend zu dem ersten Aufnahmeelement 30 des Trägerelements 28 negativ ausgebildetes erstes Gehäusewandaufnahmeelement 46 in der Art auf, dass das erste Aufnahmeelement 30 des Trägerelements 28 in dem ersten Gehäusewandaufnahmeelement 46 des Batteriemodulgehäuses 22 angeordnet ist. Alternativ oder zusätzlich weist eine zweite Seite des Trägerelements 28, wobei die zweite Seite des Trägerelements 28 der ersten Zeile des Trägerelements 28 gegenüberliegt, ein zweites Aufnahmeelement 32 in der Art auf und weiterhin weist das Batteriemodulgehäuse 22 ein entsprechend zu dem zweiten Aufnahmeelement 32 des Trägerelements 28 negativ ausgebildetes zweites Gehäusewandaufnahmeelement 48 in der Art auf, dass das zweite Aufnahmeelement 32 des Trägerelements 28 in dem zweiten Gehäusewandaufnahmeelement 48 des Batteriemodulgehäuses 22 angeordnet ist. In einer Weiterentwicklung kann das erste Aufnahmeelement 30 des Trägerelements 28 als erstes Befestigungselement 30 ausgebildet sein und/oder das zweite Aufnahmeelement 32 des Trägerelements 28 als zweites Befestigungselement 32 ausgebildet sein. Ferner kann das erste Aufnahmeelement 30 und/oder das zweite Aufnahmeelement 32 insbesondere eine zylinderförmige Form aufweisen. Weiterhin kann das erste Gehäusewandaufnahmeelement 46 und/oder das zweite Gehäusewandaufnahmeelement 48 insbesondere als zylinderförmige Ausnehmung ausgebildet sein.

Das erste Aufnahmeelement 30 des Trägerelements 28 ist insbesondere formschlüssig, kraftschlüssig und/oder stoffschlüssig mit dem Batteriemodulgehäuse 22, insbesondere mit dem ersten Gehäuseaufnahmeelement 46, verbunden. Weiterhin ist das zweite Aufnahmeelement 32 des Trägerelements 28 formschlüssig, kraftschlüssig und/oder stoffschlüssig mit dem Batteriemodulgehäuse 22, insbesondere mit dem zweiten Gehäuseaufnahmeelement 48, verbunden. In einer Weiterentwicklung kann das Trennelement 26 insbesondere mittels eines Befestigungselements, beispielsweise mittels einer Schraube, eines Stifts, eines Bolzens, eines Nagels und/oder einer Niete, an dem Batteriemodulgehäuse 22 angeordnet werden. In einer weiteren Ausführungsform kann das Trennelement 26 beispielsweise mittels eines Klebstoffs an dem Batteriemodulgehäuse 22 angeordnet werden.

Das Trennelement 26 kann sich insbesondere an der ersten Batteriezelle 38 und/oder an der zweiten Batteriezelle 40 mechanisch abstützten. In einer Weiterentwicklung ist das Trennelement 26 mittels der ersten Batteriezelle 38 und/oder der zweiten Batteriezelle 40 führbar ausgebildet.

Weiterhin sind in dieser vorteilhaften Ausführung die Mehrzahl an zweiten Kompensationselementen 50 des Trennelements 26 sichtbar. Weiterhin ist die erste Oberfläche 34 des Trägerelements 28 und die zweite Oberfläche 51 des Trägerelements 28 sichtbar. Die Mehrzahl an zweiten Kompensationselementen 50 ist insbesondere an der zweiten Oberfläche 51 des Trägerelements 28 angeordnet. Vorzugsweise kann sich das Trennelement 26 mittels der Mehrzahl an ersten Kompensationselementen 36 an der ersten Batteriezelle 38 mechanisch abstützen und weiterhin kann sich das Trennelement 26 mittels der Mehrzahl an zweiten Kompensationselementen 50 an der zweiten Batteriezelle 40 mechanisch abstützen, sodass das Trennelement 26 in Bezug zu der ersten Batteriezelle 38 und/oder der zweiten Batteriezelle 40 zumindest teilweise konstant angeordnet ist. Mit anderen Worten kann mittels der Mehrzahl an ersten Kompensationselementen 36 und/oder mittels der Mehrzahl an zweiten Kompensationselementen 50 die erste Oberfläche 34 zumindest annähernd parallel zu der ersten Batteriezelle 38 angeordnet werden. Weiterhin kann mittels der Mehrzahl an ersten Kompensationselementen 36 und/oder mittels der Mehrzahl an zweiten Kompensationselementen sich die zweite Oberfläche 51 des Trägerelements 28 zumindest annähernd parallel zu der zweiten Batteriezelle 40 angeordnet werden.

Zwischen dem Trennelement 26 und der ersten Batteriezelle 38 ist in dieser vorteilhaften Ausführung ein erster Fluidraum 52 ausgebildet und zwischen dem Trennelement 26 und der zweiten Batteriezelle 40 ein zweiter Fluidraum 54 ausgebildet.

Das Batteriemodul 20 kann insbesondere zu einer Erhöhung der mechanischen Stabilität bei einer Krafteinwirkung auf das Batteriemodulgehäuse 22 verwendet werden. Vorzugsweise kann eine auf das Batteriemodul 20 einwirkende Kraft von dem Batteriemodulgehäuse 22, insbesondere von der ersten Gehäusewand 42 des Batteriemodulgehäuses 22, auf das erste Aufnahmeelement 30 des Trägerelements 28, von dem ersten Aufnahmeelement 30 des Trägerelements 28 zu dem zweiten Aufnahmeelement 32 des Trägerelements 28 und von dem zweiten Aufnahmeelement 32 des Trägerelements 28 auf das Batteriemodulgehäuse 22 übertragen werden. Weiterhin kann eine auf das Batteriemodul 20 einwirkende Kraft von dem Batteriemodulgehäuse 22, insbesondere von der zweiten Gehäusewand 44 des Batteriemodulgehäuses 22, auf das zweite Aufnahmeelement 32 des Trägerelements 28, von dem zweiten Aufnahmeelement 32 des Trägerelements 28 zu dem ersten Aufnahmeelement 30 des Trägerelements 28 und von dem ersten Aufnahmeelement 30 des Trägerelements 28 auf das Batteriemodulgehäuse 22 übertragen werden. Mit anderen Worten kann eine Krafteinwirkung jeweils von beiden Seiten des Batteriemodulgehäuses auf die jeweilige Gehäusewand 42, 44 einwirken, wobei die Kraft mittels des Trennelements 26 auf die jeweils andere Seite des Batteriemodulgehäuses 22 bzw. auf die jeweilige andere Gehäusewand 42, 44, weitergeleitet werden kann.

Weiterhin können zwischen den Batteriezellen 24 und dem Batteriemodulgehäuse 22 Ausgleichselemente 56, 58 angeordnet werden. Insbesondere kann zwischen einer Batteriezelle 24 und der ersten Gehäusewand 42 des Batteriemodulgehäuses 22 ein erstes Ausgleichselement 56 angeordnet werden. Weiterhin kann zwischen der Batteriezelle 24 und der zweiten Gehäusewand 44 ein zweites Ausgleichselement 58 angeordnet sein. Mittels der Ausgleichselemente 56, 58 können die Batteriezellen 24 insbesondere abgefedert bzw. weich gelagert werden. Weiterhin können insbesondere Volumenänderungen der Batteriezellen 24 aufgenommen werden.

Das Trennelement 26 kann insbesondere als Zwischenplatte ausgebildet sein, wobei das Trennelement 26 als Zwischenplatte, ähnlich einem Setzkasten, zwischen den Batteriezellen 24 angeordnet ist. Das Trennelement 26 kann insbesondere als ein Elastomer-Metall- Verbundteil und/oder Elastomer-Kunststoff-Verbundteil ausgebildet sein. Die Verbindung zwischen Elastomer und Metall bzw. Elastomer und Kunststoff kann formschlüssig oder kraftschlüssig ausgebildet sein. Beispielsweise kann das Trennelement 26 bei der Herstellung umspritzt werden oder aus Einzelteilen zusammengefügt werden.

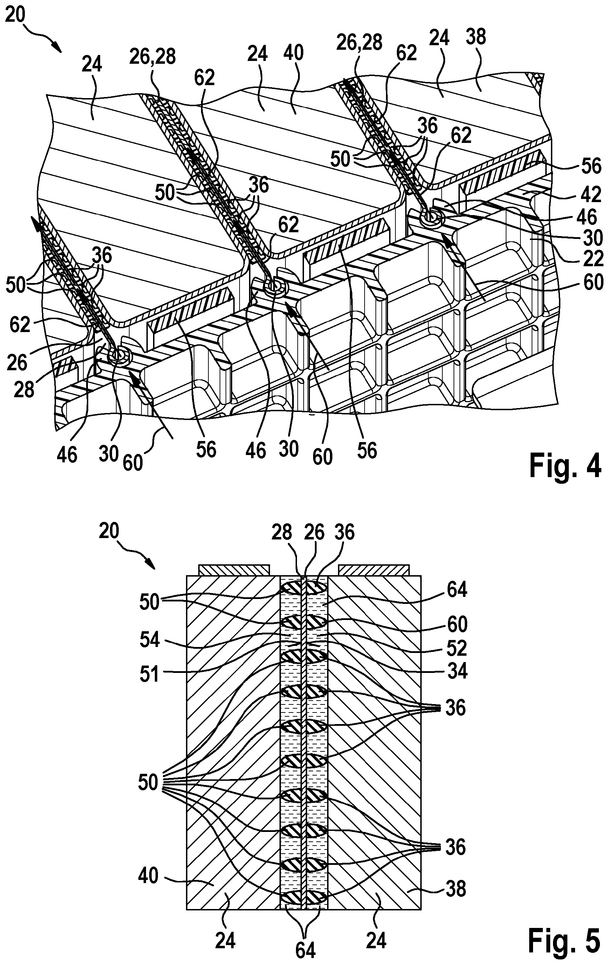

Fig. 4 zeigt in einer Schnittansicht eine schematische Darstellung eines Ausschnitts eines Batteriemoduls 20 gemäß einem Ausführungsbeispiel der vorliegenden Erfindung. Das Batteriemodul 20 gemäß Fig. 4 kann gemäß dem Batteriemodul 20 gemäß Fig. 3 ausgebildet sein. Im Unterschied zu Fig. 3 sind in Fig. 4 Lastpfade eingezeichnet. Mit anderen Worten sind Pfeile eingezeichnet, in welche beispielsweise eine Krafteinwirkung bzw. in welche die einwirkende Kraft weitergeleitet werden kann.

Eine Krafteinwirkung kann beispielsweise mittels des ersten Pfeils 60 dargestellt werden. Mit anderen Worten wird mittels des ersten Pfeils 60 eine einwirkende Kraft auf das Batteriemodulgehäuse bzw. auf die erste Gehäusewand 42 des Batteriemodulgehäuses 22 dargestellt. Die einwirkende Kraft mittels des ersten Pfeils 60 wird weiterhin von der ersten Gehäusewand 42 auf das erste Aufnahmeelement 30 des Trägerelements 28 weitergeleitet. Die Weiterleitung kann beispielsweise über das erste Gehäuseaufnahmeelement 46 der ersten Gehäusewand 42 des Batteriemodulgehäuses 22 auf das erste Aufnahmeelement 30 des Trägerelements 28 erfolgen.

Weiterhin wird die auf das erste Aufnahmeelement 30 des Trägerelements 28 eingewirkt der Kraft mittels der zweiten Pfeile 62 über das Trennelement 26 in Richtung des hier nicht dargestellten, zweiten Aufnahmeelements des Trägerelements 28 des Trennelements 26 weitergeleitet.

Die Krafteinwirkung kann ebenfalls in die entgegengesetzte Richtung wirken. Im Falle eines Stoßes auf das Batteriemodulgehäuse 22, beispielsweise bei einem Crash bzw. bei einem Unfall des Fahrzeugs, können Krafteinwirkungen bzw. Lastpfade entsprechend der Pfeile 60, 62 auf das Batteriemodul 20 und somit insbesondere auf das Batteriemodulgehäuse 22 und auf die Trennelemente 26 wirken. Mittels der Trennelemente 26 kann die einwirkende Kraft insbesondere weitergeleitet werden, wodurch die Kraft insbesondere nicht auf die Batteriezellen einwirkt. Hierdurch können die Batteriezellen 24 insbesondere vor der einwirkenden Kraft, insbesondere bei einem Crash, geschützt werden, sodass die einwirkende Kraft nicht auf die Batteriezellen 24 wirkt.

Mit anderen Worten sind insbesondere mittels der Pfeile 60, 62 Lastpfade im Falle eines Crashs und/oder eines Crushs in y-Richtung dargestellt. Dabei wird die Kraft in die vordere Gehäusehälfte, insbesondere in der die erste Gehäusewand 42, eingeleitet, wird insbesondere über die Verbindung zwischen der ersten Gehäusewand 42 und dem Trennelement 26 geführt und weiterhin über das Trennelement 26 in die hintere Gehäusehälfte bzw. in Richtung der zweiten Gehäusewand weitergeleitet, wodurch sich das Trennelement 26 an der hinteren Gehäusehälfte und somit an der zweiten Gehäusewand abstützt. Dies kann ebenfalls in umgekehrter Richtung erfolgen.

Mittels der Mehrzahl an Kompensationselementen 36, 50 kann insbesondere ein Verformen und/oder ein Ausknicken des Trennelements 26 reduziert bzw. verhindert werden da sich das Trennelement 26 bzw. die Mehrzahl an Kompensationselementen 36, 50 an den Batteriezellen 24 abstützt. Hierdurch kann das Trennelement 26 beispielsweise dünner ausgeführt werden im Vergleich zu einem Trennelement 26 ohne Kompensationselemente. Im Falle eines Crashs und/oder eines Crushs in y-Richtung wird die einwirkende Kraft bzw. der Hauptlasteintrag der einwirkenden Kraft über das Trennelement 26 und nicht über die Batteriezellen 24 weitergeleitet. Hierdurch können die Batteriezellen 24 zum Beispiel lediglich über die Kompensationselemente mit einer Kraft beaufschlagt werden, zum Beispiel zum Vorspannen der Batteriezellen 24 bzw. zum Vorspannen Batteriemoduls 20.

Fig. 5 zeigt in einer Schnittansicht eine schematische Darstellung eines Batteriemoduls 20 gemäß einem Ausführungsbeispiel der vorliegenden Erfindung. Das Batteriemodul 20 gemäß Fig. 5 kann gemäß dem Batteriemodul 20 gemäß Fig. 3 und/oder gemäß dem Batteriemodul 20 gemäß Fig. 4 ausgebildet sein. Insbesondere ist zwischen dem Trennelement 26 und der ersten Batteriezelle 38 ein erster Fluidraum 52 und zwischen dem Trennelement 26 und der zweiten Batteriezelle 40 ein zweiter Fluidraum 54 ausgebildet. Mit anderen Worten ist das Trennelement 26 zwischen mindestens zwei benachbarten Batteriezellen 38, 40 angeordnet, wobei mittels des Trennelements 26 insbesondere zwei Fluidräumen 52, 54 ausgebildet werden, insbesondere der erste Fluidraum 52 und der zweite Fluidraum 54. Mit anderen Worten unterteilt das Trennelement 26 bzw. trennt das Trennelement 26 den Bereich zwischen zwei benachbarten Batteriezellen 38, 40 in zwei Fluidräume 52, 54.

Die Fluidräume 52, 54 können insbesondere ein Fluid 64 aufweisen, wobei das Fluid 64 insbesondere als Luft ausgebildet sein kann.

Weiterhin ist gemäß Fig. 5 dargestellt, wie bei Pouch- und prismatischen Zellen eine erforderliche initiale Vorspannkraft eingestellt werden kann. Die Kompensationselemente 36, 50 können insbesondere bei einem Swelling der Batteriezellen 24 bzw. bei einem Anschwellen der Batteriezellen 24 den erforderlichen Raum bzw. Platz gewährleisten, sowie gleichzeitig eine entsprechende Rückstellkraft aufrechterhalten. Aufgrund der Inkompressibilität des Elastomer-Werkstoffs, kann die Verformung einen Spalt aufrechterhalten, sodass sich die Batteriezellen 24 insbesondere nicht berühren. Hierdurch kann ein Kurzschluss der Batteriezellen 24 verhindert werden, wobei insbesondere eine ausreichende Isolierschicht ausgebildet ist. Darüber hinaus kann insbesondere ein Luftspalt zwischen den Batteriezellen 24 erhalten bleiben, der im Falle der Propagation einer Zelle einen hohen thermischen Widerstand darstellt und dadurch verhindert, dass die nächste Zelle propagiert. Die thermische Leitfähigkeit von Luft ist zur thermischen Leitfähigkeit eines Elastomers um ca. Faktor 10 kleiner. Eine Propagation ist insbesondere eine Kettenreaktion, wobei bei einer Propagation eine zu starke erwärmte Batteriezelle 24 beispielsweise eine Nachbarzelle anstecken könnte.

Mittels unterschiedlicher Ausführungsformen bzw. unterschiedlicher Formen der Kompensationselemente 36, 50 können unterschiedliche Gummifederkennlinien der Kompensationselemente 36, 50 ausgebildet sein. Ferner kann die Anordnung der Kompensationselemente 36, 50 an dem Trägerelement 28 in unterschiedlichen Mustern ausgebildet sein. Je nach Muster kann insbesondere eine bestimmte Flächenpressung ausgebildet sein. Hierdurch können insbesondere Verpressanforderungen der Batteriezellen 24 variabel eingestellt werden.

## Patentansprüche

1. Batteriemodul (20) aufweisend eine Mehrzahl an Batteriezellen (24, 38, 40) und ein Batteriemodulgehäuse (22),
wobei das Batteriemodul (20) ein zwischen einer ersten Batteriezelle (24, 38) und einer zweiten Batteriezelle (24, 40) angeordnetes Trennelement (26) aufweist,
wobei das Trennelement (26) ein Trägerelement (28) mit einem ersten Aufnahmeelement (30) und einem zu dem ersten Aufnahmeelement (30) gegenüberliegend angeordneten, zweiten Aufnahmeelement (32) aufweist und
wobei das erste Aufnahmeelement (30) des Trägerelements (28) in der Art mit dem Batteriemodulgehäuse (22) verbunden ist und weiterhin das zweite Aufnahmeelement (32) in der Art mit dem Batteriemodulgehäuse (22) verbunden ist, dass eine vom dem Batteriemodulgehäuse (22) auf das Trennelement (26) übertragene, mechanisch einwirkende Kraft von dem ersten Aufnahmeelement (30) des Trägerelements (28) zu dem zweiten Aufnahmeelement (32) des Trägerelements (28) und von dem zweiten Aufnahmeelement (32) des Trägerelements (28) auf das Batteriemodulgehäuse (22) übertragbar ist.

2. Batteriemodul (20) nach Anspruch 1, **dadurch gekennzeichnet, dass**
das Batteriemodulgehäuse (22) eine erste Gehäusewand (42) und eine zu der ersten Gehäusewand (42) gegenüberliegend angeordnete, zweite Gehäusewand (44) aufweist und dass
die erste Gehäusewand (42) ein erstes Gehäusewandaufnahmeelement (46) aufweist und dass die zweite Gehäusewand (44) ein zweites Gehäusewandaufnahmeelement (48) aufweist.

3. Batteriemodul (20) nach einem der vorherigen Ansprüche, **dadurch gekennzeichnet, dass**
das erste Gehäusewandaufnahmeelement (46) der ersten Gehäusewand (42) das erste Aufnahmeelement (30) des Trägerelements (28) aufnimmt und/oder dass
das zweite Gehäusewandaufnahmeelement (48) der zweiten Gehäusewand (44) das zweite Aufnahmeelement (32) des Trägerelements (28) aufnimmt.

4. Batteriemodul (20) nach einem der vorherigen Ansprüche, **dadurch gekennzeichnet, dass**
das erste Aufnahmeelement (30) als ein Zylinder ausgebildet ist und dass das erste Gehäuseaufnahmeelement als eine zylinderförmige Ausnehmung in der Art ausgebildet ist, dass das zylinderförmige, erste Aufnahmeelement (30) in dem ersten Gehäuseaufnahmeelement anordenbar ist und/oder dass
das zweite Aufnahmeelement (32) als ein Zylinder ausgebildet ist und dass das zweite Gehäuseaufnahmeelement als eine zylinderförmige Ausnehmung in der Art ausgebildet ist, dass das zylinderförmige, zweite Aufnahmeelement (32) in dem zweiten Gehäuseaufnahmeelement anordenbar ist.

5. Batteriemodul (20) nach einem der vorherigen Ansprüche, **dadurch gekennzeichnet, dass**
das erste Aufnahmeelement (30) des Trägerelements (28) formschlüssig, kraftschlüssig und/oder stoffschlüssig mit dem Batteriemodulgehäuse (22), insbesondere mit dem ersten Gehäuseaufnahmeelement, verbunden ist und/oder dass
das zweite Aufnahmeelement (32) des Trägerelements (28) formschlüssig, kraftschlüssig und/oder stoffschlüssig mit dem Batteriemodulgehäuse (22), insbesondere mit dem zweiten Gehäuseaufnahmeelement, verbunden ist.

6. Batteriemodul (20) nach einem der vorherigen Ansprüche, **dadurch gekennzeichnet, dass**
das Trägerelement (28) aus einem metallischen Werkstoff und/oder aus einem polymeren Werkstoff ausgebildet ist.

7. Batteriemodul (20) nach einem der vorherigen Ansprüche, **dadurch gekennzeichnet, dass**
zwischen dem Trennelement (26) und der ersten Batteriezelle (24, 38) ein erster Fluidraum (52) ausgebildet ist und
zwischen dem Trennelement (26) und der zweiten Batteriezelle (24, 40) ein zweiter Fluidraum (54) ausgebildet ist.

8. Batteriemodul (20) nach Anspruch 5, **dadurch gekennzeichnet, dass**
der erste Fluidraum (52) und der zweite Fluidraum (54) ein Fluid aufweisen, wobei das Fluid insbesondere als Luft ausgebildet ist.

9. Batteriemodul (20) nach einem der vorherigen Ansprüche, **dadurch gekennzeichnet, dass** sich das Trennelement (26) an der ersten Batteriezelle (24, 38) und/oder an der zweiten Batteriezelle (24, 40) mechanisch abstützt und/oder dass das Trennelement (26) mittels der ersten Batteriezelle (24, 38) und/oder der zweite Batteriezelle (24, 40) führbar ist.

10. Batteriemodul (20) nach dem vorherigen Anspruch 9, **dadurch gekennzeichnet, dass**
das Trägerelement (28) eine der ersten Batteriezelle (24, 38) zugewandten ersten Oberfläche (34) und eine der zweiten Batteriezelle (24, 40) zugewandte zweite Oberfläche (51) umfasst,
dass die erste Oberfläche (34) eine Mehrzahl an elastisch verformbar ausgebildeten und jeweils kontaktierend mit der ersten Batteriezelle (24, 38) angeordneten und das Trennelement (26) mechanisch abstützende, ersten Kompensationselementen (36) umfasst und dass
die zweite Oberfläche (51) eine Mehrzahl an elastisch verformbar ausgebildeten und jeweils kontaktierend mit der zweiten Batteriezelle (24, 40) angeordneten und das Trennelement (26) mechanisch abstützende, zweiten Kompensationselementen (50) umfasst,
wobei die ersten Kompensationselemente (36) und/oder die zweiten Kompensationselemente (50) insbesondere aus einem elastomeren Werkstoff ausgebildet sind.

11. Batteriemodul (20) nach dem vorherigen Anspruch 10, **dadurch gekennzeichnet, dass**
die Mehrzahl an ersten Kompensationselementen (36) und/oder die Mehrzahl an zweiten Kompensationselementen (50) jeweils formschlüssig, stoffschlüssig oder kraftschlüssig mit dem Trägerelement (28) verbunden sind.

12. Verwendung eines Batteriemoduls (20) nach einem der vorherigen Ansprüche, wobei zu einer Erhöhung der mechanischen Stabilität bei einer Krafteinwirkung auf das Batteriemodulgehäuse (22) die einwirkende Kraft von dem Batteriemodulgehäuse (22) auf das erste Aufnahmeelement (30) des Trägerelements (28), von dem ersten Aufnahmeelement (30) des Trägerelements (28) zu dem zweiten Aufnahmeelement (32) des Trägerelements (28) und von dem zweiten Aufnahmeelement (32) des Trägerelements (28) auf das Batteriemodulgehäuse (22) übertragen wird oder
von dem Batteriemodulgehäuse (22) auf das zweite Aufnahmeelement (32) des Trägerelements (28), von dem zweiten Aufnahmeelement (32) des Trägerelements (28) zu dem ersten Aufnahmeelement (30) des Trägerelements (28) und von dem ersten Aufnahmeelement (30) des Trägerelements (28) auf das Batteriemodulgehäuse (22) übertragen wird.

13. Verwendung eines Batteriemodul (20) nach einem vorherigen Anspruch 10 bis 11,
**dadurch gekennzeichnet, dass**
sich das Trennelement (26) mittels der Mehrzahl an ersten Kompensationselementen (36) an der ersten Batteriezelle (24, 38) mechanisch abstützt und/oder dass
sich das Trennelement (26) mittels der Mehrzahl an zweiten Kompensationselementen (50) an der zweiten Batteriezelle (24, 40) mechanisch abstützt,
sodass das Trennelement (26) in Bezug zu der ersten Batteriezelle (24, 38) und/oder der zweiten Batteriezelle (24, 40) zumindest teilweise konstant angeordnet ist.
